# EUROPÄISCHE PATENTSCHRIFT

(11) **EP 2 671 680 B1**
(45) Veröffentlichungstag und Bekanntmachung des Hinweises auf die Patenterteilung: **28.11.2018**
(21) Anmeldenummer: 13001734.6
(22) Anmeldetag: 04.04.2013
(51) Int. Cl.: B25B 21/00, G01V 8/20, B25H 7/00, G01C 15/00

(54) **Handarbeitsplatz und Verfahren zur Werkerführung**
Manual workstation and method for guidance of the worker
Poste de travail manuel et procédé d'encadrement de l'opérateur

(30) Priorität: 08.06.2012 DE 102012011412
(43) Veröffentlichungstag der Anmeldung: 11.12.2013
(73) Patentinhaber: ROBERT BOSCH GMBH, 70442 Stuttgart (DE)
(72) Erfinder: Authenrieth, Martin, 74613 Oehringen (DE)
(74) Vertreter: Thürer, Andreas

(56) Entgegenhaltungen:
- EP-A2- 1 384 091
- CH-A5- 692 524
- DE-A1- 10 320 557
- US-A1- 2006 106 483
- US-A1- 2007 180 674
- US-A1- 2008 115 589

## Beschreibung

Die vorliegende Erfindung betrifft einen Handarbeitsplatz gemäß dem Oberbegriff des Patentanspruchs 1 sowie ein Verfahren zur Werkerführung, gemäß dem Oberbegriff des Patentanspruchs 9.

Ein derartiger Handarbeitsplatz und ein derartiges Verfahren gehen beispielsweise aus der US 2007/180674 A1 hervor.

### Stand der Technik

Bei Schraubmontageprozessen an Handarbeitsplätzen besteht oft die Anforderung, dass Schraubstellen in einer fest vordefinierten Reihenfolge (Arbeitsfolge) abgearbeitet werden müssen. Dies ist beispielsweise der Fall, wenn Aggregate an einen Verbrennungsmotor in einer bestimmen Reihenfolge angebaut werden müssen. Auch kann durch die Einhaltung einer festgelegten Reihenfolge von Verschraubungen vermieden werden, dass am Werkstück Verspannungen auftreten. Beispiel hierfür ist die Zylinderkopfmontage an Reparaturarbeitsplätzen.

Um das Einhalten der richtigen Reihenfolge zu erleichtern, können Werkerführungen eingesetzt werden. Beispielsweise kann dem Werker die Position der nächsten Schraubstelle auf einem Monitor dargestellt werden. Hierfür muss der Werker jedoch den Blick vom Werkstück abwenden. Je nach Art und Größe der Darstellung auf dem Monitor fällt die Zuordnung der Schraubstelle auf dem Werkstück mehr oder weniger schwer und kann zu Fehlern bei der Abarbeitung führen.

Auch kann die aktuelle Position des Schraubwerkzeuges bestimmt und dieses durch die Schraubersteuerung gesperrt oder freigegeben werden, sofern es sich in der Sollposition befindet. Erst nach Freigabe kann der Werker das Werkzeug betreiben. Zur Positionsbestimmung können Ultraschallverfahren oder auch Kamera basierende (bildverarbeitende) Systeme dienen.

Aus der US 2007/180674 A1, der US 2006/106483 A1, der US 2008/115589 A1 und der DE 103 20 557 A1 ist jeweils ein Handarbeitsplatz bekannt, bei dem ein Leuchtfleck erzeugt werden kann, um eine Montagestelle an einem zu bearbeitenden Werkstück anzuzeigen. Teils werden dabei auch konkrete Bilder auf die betreffende Montagestelle projiziert.

Es ist wünschenswert, die Anzeige der Arbeitsfolge für den Werker zu verbessern.

### Offenbarung der Erfindung

Erfindungsgemäß werden ein Handarbeitsplatz sowie ein Verfahren zur Werkerführung mit den Merkmalen der unabhängigen Patentansprüche vorgeschlagen. Vorteilhafte Ausgestaltungen sind Gegenstand der Unteransprüche sowie der nachfolgenden Beschreibung.

### Vorteile der Erfindung

Die Erfindung bedient sich der Maßnahme, die jeweils nächste Montagestelle dem Werker nicht indirekt über bspw. einen Monitor, sondern direkt auf dem Werkstück selbst anzuzeigen. Dafür wird zweckmäßigerweise eine Vorrichtung für die Werkerführung mit wenigstens einer Beleuchtungsvorrichtung eingesetzt, die die jeweils nächste Montagestelle lokal beleuchtet. Es kann sich dabei um eine Spotbeleuchtung, aber auch um eine Punktbeleuchtung, z.B. mittels eines fokussierten Lichtstrahls oder Laserstrahls handeln. Der Werker muss daher den Blick nicht mehr vom Werkstück abwenden, sondern kann kontinuierlich weiterarbeiten. Die Montagegeschwindigkeit wird erhöht. Durch die Anzeige direkt auf dem Werkstück können keine Zuordnungsfehler auftreten, das Montagergebnis wird verbessert. Es wird ein Leuchtfleck erzeugt, der der Montagestelle zuordenbar ist. Es wird zweckmäßigerweise ein Leuchtfleck auf oder nahe bei der Montagestelle erzeugt.

In einer vorteilhaften Weiterbildung kann das Werkzeug des Werkzeugsystems, beispielsweise ein Schrauber eines Schraubsystems, mit einem optischen Empfänger ausgerüstet sein und das Werkzeugsystem eine Steuereinrichtung aufweisen, die eine Bedienung des Werkzeugs nur freigibt, wenn der optische Empfänger ein von der Beleuchtungsvorrichtung ausgestrahltes Licht empfängt. Das Licht ist erfindungsgemäß kodiert, z.B. frequenz- oder PWM-moduliert, so dass die Steuereinrichtung den Empfang des korrekten Lichts detektieren kann. Beispielsweise kann über den Lichtstrahl ein Freigabesignal an das Werkzeug übertragen werden. Das Werkzeug kann durch den Werker nur dann gestartet werden, wenn es sich an der Montagestelle befindet.

Die Steuereinrichtung des Werkzeugsystems ist vorzugsweise mit der Steuereinrichtung der Werkerführungsvorrichtung mittels einer Datenverbindung, z.B. kabelgebunden oder kabellos, verbunden. So kann insbesondere festgestellt werden, ob sich das Werkzeug an der richtigen Montagestelle befindet, so dass eine Freigabe erfolgen kann. Vorzugsweise kann auf diesem Weg auch eine Rückmeldung des Werkzeugsystems an die Werkerführungsvorrichtung erfolgen, dass die aktuelle Montagestelle abgearbeitet ist, bspw. indem von dem Werker ein Schaltelement am Werkzeug oder Werkzeugsystem betätigt wird. Daraufhin kann die nächste Montagestelle angezeigt werden. Die Rückmeldung kann auch automatisch, bspw. über eine Drehmomentbestimmung, erfolgen, d.h. die aktuelle Montagestelle wird bei Erreichen eines Drehmomentschwellwerts als abgearbeitet erkannt.

Gemäß einer besonders bevorzugten Ausführungsform zeigt die Werkerführungsvorrichtung dem Werker die Position der nächsten Montagestelle auf dem Werkstück an. Befindet sich das Werkzeug an der richtigen Position, was insbesondere über den oben beschriebenen optischen Empfänger geprüft werden kann, teilt das Werkzeugsystem der Werkerführungsvorrichtung über die oben beschriebene Datenverbindung mit, dass sich das Werkzeug an der Sollposition befindet. Daraufhin wird (z.B. von der Werkerführungsvorrichtung) eine Freigabe des Werkzeugs veranlasst. Der Werker startet über ein Betätigungselement ("Startschalter") des Werkzeuges den Werkvorgang und hält das Betätigungselement solange betätigt, bis das Werkzeug signalisiert, dass der Werkvorgang abgearbeitet ist, z.B. durch Drehmomentüberwachung. Eine ordnungsgemäß durchgeführte Montage (z.B. Verschraubung) wird beispielsweise mittels eines Leuchtsignals (z.B. grüne LED) signalisiert, konnte die Montage nicht ordnungsgemäß durchgeführt werden, wird dies über ein anderes Leuchtsignal (z.B. rote LED) signalisiert. Gleichzeitig gibt das Werkzeugsystem diese Information über die oben beschriebene Datenverbindung an die Werkerführungsvorrichtung weiter. Dabei können auch die Montageparameter (z.B. erreichtes Drehmoment, Eindrehwinkel, Eindrehzeit etc.) an eine überlagerte Liniensteuerung, z.B. mittels eines Feldbusses, übermittelt werden.

Vorzugsweise wird das Werkzeugsystem in Abhängigkeit von der Montagestelle angesteuert, insbesondere können montagestellenspezifische Parameter, wie z.B. ein Drehmoment, an das Werkzeug übertragen werden.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

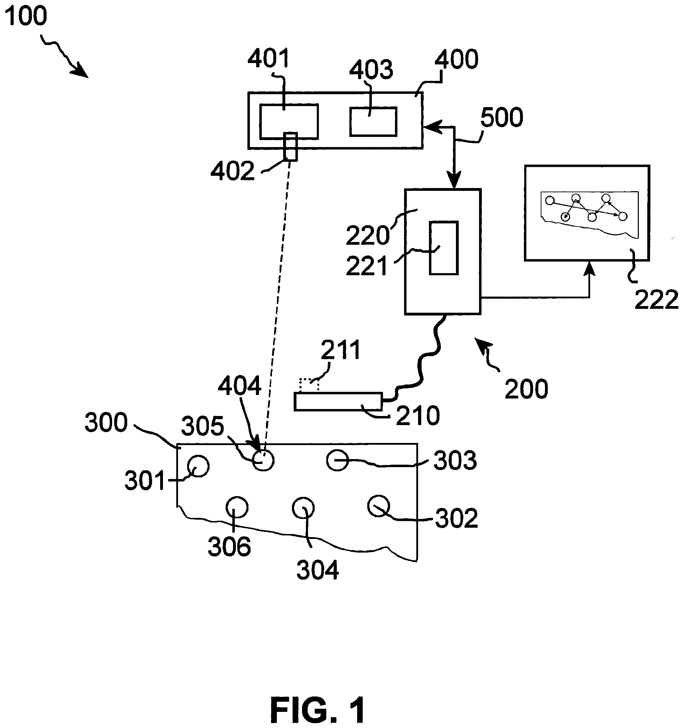

- Figur 1: zeigt einen Handarbeitsplatz gemäß einer bevorzugten Ausführungsform der Erfindung.

### Detaillierte Beschreibung der Zeichnung

In Figur 1 ist eine bevorzugte Ausführungsform eines erfindungsgemäßen Handarbeitsplatzes schematisch dargestellt und insgesamt mit 100 bezeichnet. Der Handarbeitsplatz weist ein Werkzeugsystem 200 auf, welches hier als Schraubsystem ausgebildet ist. Das Schraubsystem 200 weist einen handgeführten Schrauber 210 als Werkzeug auf, der über eine Kabelverbindung mit einer Werkzeugsteuereinheit 220 verbunden ist. Die Werkzeugsteuereinheit 220 weist eine Steuereinrichtung 221 (insbesondere eine Recheneinheit mit Computerprogramm) auf, die das Schraubsystem 200 steuert.

Das Schraubsystem 200 wird verwendet, um Schraubverbindungen 301 bis 306 auf einem Werkstück 300 vorzunehmen, wobei das Einhalten einer richtigen Reihenfolge erwünscht ist. Beispielsweise kann daher die Steuereinrichtung 221 des Schraubsystems 200 dazu eingerichtet sein, dem Werker auf einem zugehörigen Monitor 222 die Arbeitsfolge, d.h. die Reihenfolge der vorzunehmenden Schraubverbindungen, darzustellen. Die richtige Reihenfolge der Montagestellen ist hier beispielsweise durch Pfeile angezeigt. Derartige Schraubsysteme 200 sind im Stand der Technik prinzipiell bekannt und sollen daher an dieser Stelle nicht näher erläutert werden.

Um den Werker diese Arbeit zu erleichtern, verfügt der Handarbeitsplatz 100 weiterhin über eine Werkerführungsvorrichtung 400, die wenigstens eine Beleuchtungsvorrichtung 401 mit im vorliegenden Beispiel einer Anordnung 402 aus einer Laser-Lichtquelle und einem Scan-Spiegel aufweist. Die Werkerführungsvorrichtung 400 verfügt weiterhin über eine Steuereinrichtung 403, die zur Ansteuerung der Werkerführungsvorrichtung 400 eingerichtet ist. Es sei erwähnt, dass auch eine LED-Lichtquelle oder Glühlampe eingesetzt werden kann.

Die Anordnung 402 ist in der Lage, einen Leuchtfleck 404 auf dem zu bearbeitenden Werkstück 300 zu erzeugen und im Wesentlichen wahlfrei zu positionieren. Wie eine Laser-Lichtquelle mit einem Scan-Spiegel entsprechend betrieben werden kann, ist im Stand der Technik ebenfalls grundsätzlich bekannt. Statt eines Scan-Spiegels kann auch die Lichtquelle selbst in zwei Achsen verschwenkbar gelagert sein. Daneben sind auch andere Möglichkeiten bekannt, z.B. dass ein Schlitten mit einer Lichtquelle linear verschoben wird und die Lichtquelle auf dem Schlitten verschwenkt wird, wie es beispielsweise bei Paternosterlagern zur Anzeige des Entnahmefaches eingesetzt wird. Dadurch wird z.B. die x-Position des Leuchtflecks durch Verfahren der Lichtquelle erreicht, die y-Position durch Schwenken derselben.

Im Rahmen der Erfindung ist nun die Steuereinrichtung 403 der Werkerführungsvorrichtung 400 dazu eingerichtet, die Beleuchtungsvorrichtung 401 so anzusteuern, dass der Leuchtfleck 404 auf oder nahe bei der momentan zu bearbeitenden Montagestelle 301 bis 306 positioniert wird. In der Abbildung gemäß Figur 1 ist der Leuchtfleck 404 gerade auf der Montagestelle 305 positioniert. Dadurch wird dem Werker angezeigt, welche Montagestelle als nächstes bearbeitet werden muss.

Gemäß einer bevorzugten Weiterbildung kann der Schrauber 210 einen hier gestrichelt dargestellten Fotoempfänger 211 aufweisen. Die Steuereinrichtung 221 des Schraubsystems 200 kann dazu eingerichtet sein, eine Betätigung des Werkzeugs 210 zu sperren, wenn sich das Werkzeug 210 nicht an der angezeigten Montagestelle 305 befindet, d.h. wenn der Fotoempfänger 211 nicht von dem Leuchtfleck 404 getroffen wird. Wird der Fotoempfänger 211 jedoch von dem Leuchtfleck 404 getroffen, wird eine Betätigung des Schraubers 210 freigegeben. Um eine richtige Zuordnung eines Schraubers 210 zu einer Werkerführungsvorrichtung 400 sicherzustellen, ist die Beleuchtungsvorrichtung 401 dazu eingerichtet, kodiertes Licht (z. B. frequenz- oder PWM-moduliert) auszustrahlen. Dadurch kann das Werkzeug 210 bzw. die Werkzeugsteuereinheit 220 erkennen, ob sich das Werkzeug 210 an der richtigen Montagestelle befindet.

Zwischen der Werkzeugsteuereinheit 220 und der Werkführungsvorrichtung 400 kann eine kabelgebundene oder kabellose Datenverbindung 500 eingerichtet sein, um einen Datenaustausch zwischen Werkzeugssystem 200 und Werkführungsvorrichtung 400 zu ermöglichen. Auf diesem Weg erfolgt z.B. eine Rückmeldung des Werkzeugsystems 200 an die Werkerführungsvorrichtung 400, dass die aktuelle Montagestelle abgearbeitet ist. Dies kann manuell (z.B. durch Betätigung eines Schaltelements (nicht gezeigt) am Werkzeug oder Werkzeugsystem) oder vorzugsweise automatisch, wie oben erläutert, erfolgen. Daraufhin kann die nächste Montagestelle auf dem Werkstück 300 angezeigt werden.

## Patentansprüche

1. Handarbeitsplatz (100) mit einem Werkzeugsystem (200), das ein handgeführtes Werkzeug (210) zum Bearbeiten eines Werkstücks (300) aufweist, und einer Werkerführungsvorrichtung (400), die wenigstens eine Beleuchtungsvorrichtung (401) aufweist, die dafür ausgebildet ist, einen Leuchtfleck (404) auf einem zu bearbeitenden Werkstück (300) zu erzeugen und die Position des Leuchtflecks einzustellen, wobei die Werkerführungsvorrichtung dazu eingerichtet ist, auf dem zu bearbeitenden Werkstück eine Montagestelle (301-306) durch den Leuchtfleck (404) anzuzeigen,
**dadurch gekennzeichnet, dass**
die Beleuchtungsvorrichtung (401) dazu eingerichtet ist, einen kodierten Lichtstrahl auszustrahlen, und mit dem kodierten Lichtstrahl Daten an das Werkzeug (210) zu übertragen.

2. Handarbeitsplatz (100) nach Anspruch 1, wobei die Werkerführungsvorrichtung eine Steuereinrichtung (221) aufweist, die dazu eingerichtet ist, die Beleuchtungsvorrichtung (401) so anzusteuern, dass der Leuchtfleck (404) auf oder nahe der Montagestelle (301-306) positioniert wird.

3. Handarbeitsplatz (100) nach Anspruch 1 oder 2, wobei das Werkzeugsystem (200) eine Steuereinrichtung (221) aufweist, die dazu eingerichtet ist, der Werkerführungsvorrichtung die Position der Montagestelle (301-306) zu übermitteln.

4. Handarbeitsplatz (100) nach einem der vorstehenden Ansprüche, wobei die Montagestelle die jeweils nächste Montagestelle (305) ist.

5. Handarbeitsplatz (100) nach einem der vorstehenden Ansprüche, wobei die Beleuchtungsvorrichtung (401) eine Laser- oder LED-Lichtquelle aufweist.

6. Handarbeitsplatz (100) nach einem der vorstehenden Ansprüche, wobei das Werkzeug (210) einen Photoempfänger (211) aufweist und wobei das Werkzeugsystem (200) dazu eingerichtet ist, eine Betätigung des Werkzeugs (210) zu sperren, wenn sich das Werkzeug (210) nicht an der angezeigten Montagestelle (305) befindet.

7. Handarbeitsplatz (100) nach einem der vorstehenden Ansprüche, wobei das Werkzeugsystem (200) als Schraubsystem ausgebildet ist, das einen handgeführten Schrauber als Werkzeug (210) aufweist.

8. Handarbeitsplatz (100) nach einem der vorstehenden Ansprüche, wobei die Beleuchtungsvorrichtung (401) eine Vorrichtung, z.B. einen Scanspiegel oder eine Schwenkvorrichtung, zur wahlfreien Positionierung des Leuchtflecks auf dem Werkstück aufweist.

9. Verfahren zur Werkerführung, wobei eine jeweils nächste Montagestelle (305) auf einem Werkstück (300) durch einen Leuchtfleck auf dem Werkstück (300) angezeigt wird, wobei ein Handarbeitsplatz nach einem der Ansprüche 1 bis 8 verwendet wird.

## Claims

1. Manual workstation (100) having a tool system (200) which has a manually guided tool (210) for processing a workpiece (300), and a worker guidance device (400), which has at least one illumination device (401) which is designed to generate a spot of light (404) on a workpiece (300) to be processed and to adjust the position of the spot of light, wherein the worker guidance device is equipped to indicate an assembly point (301-306) on the workpiece to be processed by means of the spot of light (404), **characterized in that** the illumination device (401) is equipped to emit an encoded light beam, and to transmit data to the tool (210) by using the encoded light beam.

2. Manual workstation (100) according to Claim 1, wherein the worker guidance device has a control apparatus (221) which is equipped to drive the illumination device (401) such that the spot of light (404) is positioned on or close to the assembly point (301-306).

3. Manual workstation (100) according to Claim 1 or 2, wherein the tool system (200) has a control apparatus (221) which is equipped to transmit the position of the assembly point (301-306) to the worker guidance device.

4. Manual workstation (100) according to one of the preceding claims, wherein the assembly point is the respective next assembly point (305).

5. Manual workstation (100) according to one of the preceding claims, wherein the illumination device (401) has a laser or LED light source.

6. Manual workstation (100) according to one of the preceding claims, wherein the tool (210) has a photo receiver (211) and wherein the tool system (200) is equipped to block actuation of the tool (210) if the tool (210) is not located at the indicated assembly point (305).

7. Manual workstation (100) according to one of the preceding claims, wherein the tool system (200) is constructed as a screw fixing system which has a manually guided inserter as tool (210).

8. Manual workstation (100) according to one of the preceding claims, wherein the illumination device (401) has a device, for example a scanning mirror or a pivoting device, for the optional positioning of the spot of light on the workpiece.

9. Worker guidance method, wherein a respective next assembly point (305) on a workpiece (300) is indicated by a spot of light on the workpiece (300), wherein a manual workstation according to one of Claims 1 to 8 is used.

## Revendications

1. Poste de travail manuel (100) comprenant un système d'outils (200) qui comporte un outil à main (210) destiné à usiner une pièce (300) et un dispositif de guidage d'opérateur (400) qui comporte au moins un dispositif d'éclairage (401) qui est conçu pour générer un point lumineux (404) sur une pièce (300) à usiner et pour régler la position du point lumineux, le dispositif de guidage d'opérateur étant adapté pour indiquer un emplacement de montage (301-306) sur la pièce à usiner par le biais du point (404) lumineux, **caractérisé en ce que** le dispositif d'éclairage (401) est adapté pour émettre un faisceau lumineux codé et pour transmettre des données à l'outil (210) au moyen du faisceau lumineux codé.

2. Poste de travail manuel (100) selon la revendication 1, le dispositif de guidage d'opérateur comprenant un moyen de commande (221) adapté pour commander le dispositif d'éclairage (401) de manière à positionner le point lumineux (404) à l'emplacement de montage (301-306) ou à proximité de celui-ci.

3. Poste de travail manuel (100) selon la revendication 1 ou 2, le système d'outil (200) comprenant un moyen de commande (221) adapté pour transmettre la position de l'emplacement de montage (301-306) au dispositif de guidage d'opérateur.

4. Poste de travail manuel (100) selon l'une des revendications précédentes, l'emplacement de montage étant à chaque fois l'emplacement de montage suivant (305).

5. Poste de travail manuel (100) selon l'une des revendications précédentes, le dispositif d'éclairage (401) comprenant une source de lumière laser ou LED.

6. Poste de travail manuel (100) selon l'une des revendications précédentes, l'outil (210) comportant un photorécepteur (211) et le système d'outil (200) étant adapté pour bloquer un actionnement de l'outil (210) lorsque l'outil (210) ne se trouve pas à l'emplacement de montage (305) indiqué.

7. Poste de travail manuel (100) selon l'une des revendications précédentes, le système d'outil (200) étant conçu comme un système de vissage qui comporte comme outil (210) un tournevis à main.

8. Poste de travail manuel (100) selon l'une des revendications précédentes, le dispositif d'éclairage (401) comprenant un dispositif, par exemple un miroir de balayage ou un dispositif pivotant destiné à positionner sélectivement le point lumineux sur la pièce.

9. Procédé de guidage d'opérateur, un emplacement de montage suivant respectif (305) sur une pièce (300) étant indiqué par un point lumineux sur la pièce (300), un poste de travail manuel selon l'une des revendications 1 à 8 étant utilisé.
